Europäisches Patentamt

European Patent Office

Office européen des brevets

(11) Veröffentlichungsnummer: **0 005 303**
**B1**

(12) **EUROPÄISCHE PATENTSCHRIFT**

(45) Veröffentlichungstag der Patentschrift:
29.04.81

(51) Int. Cl.³: **B 26 B 19/38,** H 02 K 5/24

(21) Anmeldenummer: 79200215.6

(22) Anmeldetag: 03.05.79

(54) Gehäuse für einen elektrischen Rasierapparat.

(30) Priorität: 05.05.78 DE 2819716

(43) Veröffentlichungstag der Anmeldung:
14.11.79 Patentblatt 79/23

(45) Bekanntmachung des Hinweises auf die Patenterteilung:
29.04.81 Patentblatt 81/17

(84) Benannte Vertragsstaaten:
AT BE CH FR GB IT NL SE

(56) Entgegenhaltungen:
DE-B-1 285 362
DE-U-1 790 734
FR-A-2 082 480

(73) Patentinhaber: Braun Aktiengesellschaft, Rüsselsheimer Strasse 22, D-6000 Frankfurt/Main (DE)

(72) Erfinder: Schweingruber, Otto, Höhenblick 1,
D-6246 Glashütten 1 (DE)

(74) Vertreter: Einsele, Rolf, Braun Aktiengesellschaft Postfach 1120 Am Schanzenfeld, D-6242 Kronberg Taunus (DE)

## Gehäuse eines elektrischen Rasierapparates

Da Rasierapparate meist in den frühen Morgenstunden benutzt werden, wird ihre Geräuschentwicklung vielfach als störend empfunden. Geräusche entstehen bei elektrischen Rasierapparaten in erster Linie dadurch, daß von den beweglichen Teilen im Rasierapparat Schwingungen auf sein Gehäuse übertragen werden und dieses die Schwingungen dann weitergibt. Häufig wirkt das Gehäuse sogar wie ein Resonanzkörper, der die von den beweglichen Teilen herrührenden Schwingungen noch verstärkt. Abgesehen von der akustischen Belästigung ist ein Vibrieren des Gehäuses des Rasierapparates auch bei der Benutzung des Rasierapparates unangenehm.

Da das Problem der Geräuschminderung bei Gehäusen von Geräten uralt ist, sind in der Literatur und in der Praxis zahlreiche Maßnahmen zur Geräuschminderung bekanntgeworden. Die US-A-2 597 552 gibt z. B. die Lehre, das feste Gehäuse eines Rasierapparates außenseitig mit einem Streifen aus weichem, schallschluckendem Material schraubenlinienförmig zu umwickeln und hierüber eine Außenhaut aus z. B. Textilgewebe vorzusehen.

Diese Methode der Schalldämpfung mag zwar relativ wirkungsvoll sein, sie ist für die Serienfertigung eines Massenproduktes, wie es elektrische Rasierapparate heutzutage darstellen, allerdings viel zu teuer.

Das gleiche gilt für die in der DE-C-315 570 beschriebenen Maßnahme, das Gehäuse zum Zwecke der Schalldämmung doppelwandig auszuführen. Auch der an sich in der DE-C-317 570 einfach zu verwirklichende Gedanke, das Gehäuse allseitig gewölbt auszubilden, ist für Gehäuse von Rasierapparaten nur bedingt ausführbar, da bei ihnen das Gehäuse zum einen möglichst kompakt, zum anderen nach Gesichtspunkten der Handlichkeit gestaltet sein muß.

Das DE-U-1 790 734 beschreibt eine besonders billige Maßnahme, die Geräuschentwicklung von Rasierapparaten zu vermindern. Um die Eigenfrequenz des Gehäuses gegen die Schneidfrequenz des Rasierapparates zu verstimmen, weist die Wandung des Gehäuses gemäß dem DE-U-1 790 734 örtliche Verdickungen auf. Leider führen diese Verdickungen der Wandstärke von Kunststoffgehäusen infolge der unterschiedlich schnellen Abkühlung der Gehäuseteile bei der Herstellung der Gehäuse zu Wärmespannungen und dadurch zu Dellen im Gehäuse. Abgesehen vom unschönen Aussehen eines Gehäuses mit Dellen in der Oberfläche können die Wärmespannungen die Festigkeit des Gehäuses erheblich mindern.

Der Erfindung liegt die Aufgabe zugrunde, ein Gehäuse eines elektrischen Rasierapparates zu entwickeln, welches einerseits möglichst weitgehend Geräusche dämmt und frei von Vibrationen ist, andererseits jedoch billig und problemlos hergestellt werden kann.

Diese Aufgabe wird erfindungsgemäß dadurch gelöst, daß im gehäuseinnenseitigen Freiraum eine Vielzahl aus der Gehäusewandung hervorspringender, seitlich miteinander verbundener, hohler Säulen unterschiedlicher Höhe vorgesehen sind. Die Vorteile der Erfindung liegen darin, daß durch die seitlich einander verbundenen Säulen das Gehäuse sehr wirkungsvoll ausgesteift wird. Seine Neigung zu Schwingungen ist dadurch von vornherein sehr gering. Durch Bemessung und Anordnung der Säulen kann die Eigenfrequenz des Gehäuses gegenüber der Schnittfrequenz des Rasierapparates derart verstimmt werden, daß keine Resonanzen auftreten und das Gehäuse die Geräusche der Einbauteile des Rasierapparates gut dämpft. Die Säulen können gleiche oder geringere Wandstärke haben wie die Gehäusewandung, so daß keine Materialanhäufungen gegeben sind, welche Ursache für Wärmespannungen oder für das Auftreten von Dellen sein können. Durch die wirkungsvolle Aussteifung des Gehäuses sind Gehäusevibrationen leicht zu vermeiden.

Durch eine unterschiedliche Bemessung der Höhen der Säulen nach Maßgabe des vorhandenen Freiraumes kann andererseits auf die Abmessungen der Einbauteile Rücksicht genommen werden. Die Säulen können sogar zur Arretierung der Einbauteile herangezogen werden.

Durch Verändern der Höhen der Säulen kann darüber hinaus auch die Eigenfrequenz des Gehäuses auf einfache Weise beeinflußt werden.

Eine vorteilhafte Ausgestaltung der Erfindung besteht darin, daß die Säulen durch eine Gitterkonstruktion mit sich kreuzenden Stegen gebildet sind. Bei dieser Ausgestaltung haben benachbarte Säulen jeweils gemeinsame Wände. Auf diese Weise entsteht eine Verrippung des Gehäuses, welche besonders billig und mit besonders wenig Material hergestellt werden kann.

Vorteilhaft ist es auch, wenn die Säulen im Querschnitt die Form regelmäßiger Sechsecke haben. Es entsteht auf diese Weise ein Bienenwabenmuster, welches zur Schwingungsdämpfung besonders geeignet ist. Über die Luft von den Einbauteilen übertragene Schallwellen werden teilweise absorbiert, teilweise unregelmäßig durch die Sechseckform der Säulen reflektiert. Dies führt zu einer besonders wirkungsvollen Schalldämpfung.

Vorteilhaft ist es auch, wenn gemäß der Erfindung die Säulen im rechten Winkel zur Rückwand bzw. Vorderwand des Rasierapparates sich erstrecken und an den Seitenwänden des Rasierapparates von der Rückwand bzw. Vorderwand aus so hoch gezogen sind, daß die Seitenwände vollständig von ihnen abgedeckt sind. Durch diese Maßnahme sind die Seitenwände des Gehäuses durch die hochgezogenen Säulen doppelwandig ausgebildet. Dadurch ist eine gute Schallisolation gegeben. Durch die Mantelflächen der Säulen werden auftreffende Schallwellen unregelmäßig reflektiert und im Inneren des Gehäuses zurückgehalten.

Fertigungstechnisch besonders günstig ist es, wenn die an den Seitenwänden hochgezogenen Säulen im Querschnitt die Form eines halben Sechsecks haben und mit den jeweiligen Seitenwänden mit senkrecht hierzu stehenden Wandabschnitten verbunden sind. Diese Ausführungsform zeichnet sich auch durch eine besonders gute Schalldämpfung aus.

Ein Ausführungsbeispiel der Erfindung ist in der Zeichnung dargestellt und wird nachfolgend beschrieben. Es zeigt

Fig. 1 einen Blick in eine Gehäusehälfte eines erfindungsgemäß gestalteten Gehäuses eines elektrischen Rasierapparates,

Fig. 2 einen Schnitt durch die Gehäusehälfte nach Fig. 1 entlang der Linie II/II.

Das erfindungsgemäß gestaltete Gehäuse des Rasierapparates besteht aus zwei Gehäusehälften, welche weitgehend gleich geformt sind und von denen eine Gehäusehälfte 1 dargestellt ist. Die Gehäusehälfte 1 hat eine Rückwand 2 sowie zwei Seitenwände 3 und 4. Die Rückwand 2 ist innenseitig durch eine Gitterkonstruktion 5 verrippt. Diese Gitterkonstruktion 5 besteht aus stumpfwinklig aufeinanderstoßenden Stegen, z. B. 6, 7 und 8. Bei der vorliegenden Ausführungsform verlaufen die Stege 6, 7 und 8 derart, daß durch sie im Querschnitt sechseckige Säulen 9 entstehen, die etwa ein Bienenwabenmuster bilden.

Die Säulen können aber auch durch sich kreuzende Stege gebildet sein, wodurch im Querschnitt rechteckige oder trapezförmige Säulen entstehen.

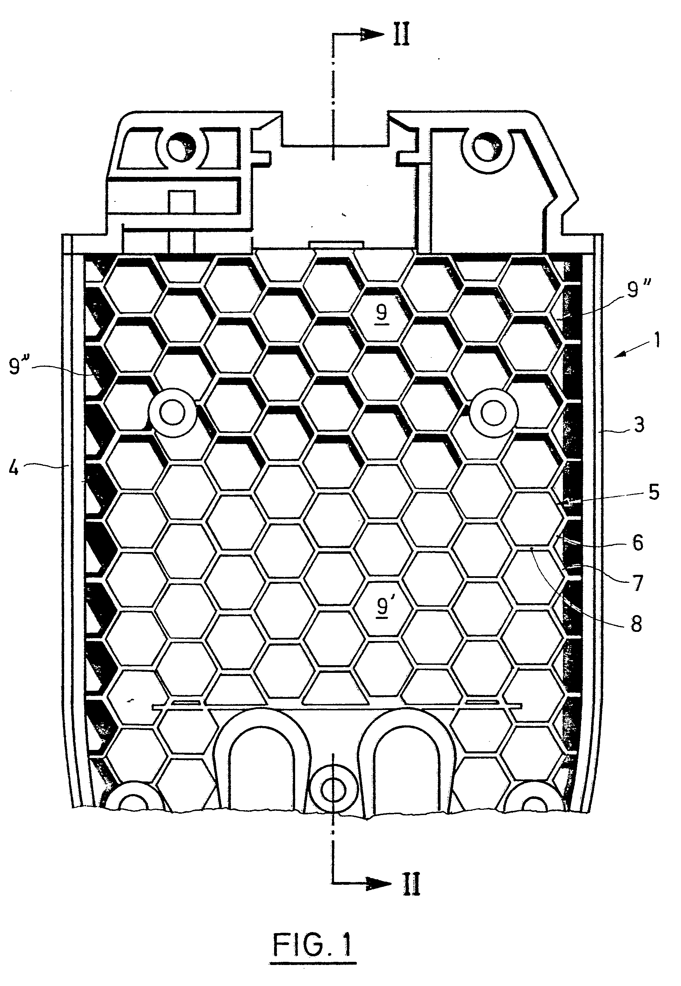

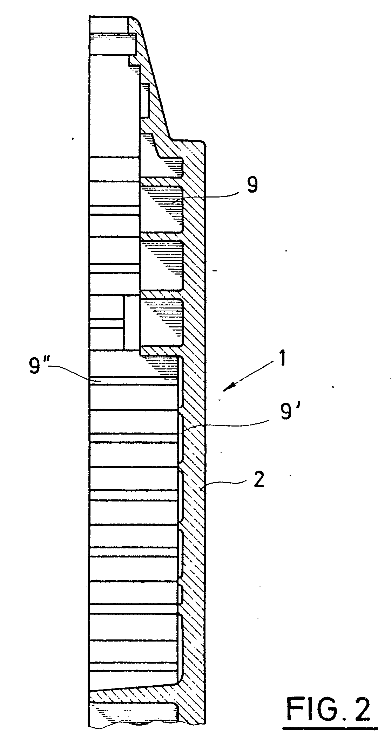

Fig. 2 läßt erkennen, daß die einzelnen Säulen 9 an der Seite des Scherkopfes der Gehäusehälfte 1 relativ weit aus der Rückwand 2 herausragen, während die Säulen 9' im weiter unten gelegenen Bereich nur etwa einen Millimeter aus der Rückwand 2 herausragen. Durch diese geringe Höhe der Säulen 9' im unteren Teil des Gehäuses bleibt der notwendige Raum zur Unterbringung des Motors des Rasierapparates erhalten. Die Fig. 1 zeigt weiterhin, daß die Säulen 9'' an den Seitenwänden 3 und 4 im Querschnitt nur halbe Sechsecke bilden und mit ihren Wandflächen senkrecht auf die Seitenwände 3 und 4 treffen. Fig. 2 zeigt, daß diese Säulen 9'' noch wesentlich höher sind als die Säulen 9, so daß sie beim Zusammenfügen zweier Gehäusehälften 1 aufeinanderstoßen.

Die Säulen müssen im Freiraum, das heißt in dem von den Einbauteilen nicht beanspruchten Raum des Gehäuses, nicht zwingend die gesamte Innenfläche des Gehäuses bedecken, sie können je nach den speziellen Erfordernissen auch nur an einzelnen Stellen oder, bei mehrteiligen Gehäusen, an einem dieser Gehäuseteile angebracht sein.

## Patentansprüche

1. Gehäuse eines elektrischen Rasierapparates, dadurch gekennzeichnet, daß im gehäuseinnenseitigen Freiraum eine Vielzahl aus der Gehäusewandung hervorspringender, seitlich miteinander verbundener hohler Säulen (9, 9', 9'') unterschiedlicher Höhe vorgesehen sind.

2. Gehäuse nach Anspruch 1, dadurch gekennzeichnet, daß die Säulen durch eine Gitterkonstruktion mit sich kreuzenden Stegen gebildet sind.

3. Gehäuse nach Anspruch 1, dadurch gekennzeichnet, daß die Säulen (9, 9', 9'') im Querschnitt die Form regelmäßiger Sechsecke haben.

4. Gehäuse nach den Ansprüchen 1 bis 3, dadurch gekennzeichnet, daß die Säulen (9, 9', 9'') sich im rechten Winkel zur Rückwand (2) bzw. Vorderwand des Rasierapparates erstrecken und an den Seitenwänden (3, 4) des Rasierapparates von der Rückwand (2) bzw. Vorderwand aus so hoch gezogen sind, daß die Seitenwände (3, 4) vollständig von innen abgedeckt sind.

5. Gehäuse nach Anspruch 4, dadurch gekennzeichnet, daß die an den Seitenwänden (3, 4) hochgezogenen Säulen (9'') im Querschnitt die Form eines halben Sechsecks haben und mit den jeweiligen Seitenwänden (3, 4) mit senkrecht hierzu stehenden Wandabschnitten verbunden sind.

## Claims

1. Casing for an electric shaver, characterised in that in the space on the inside of the casing a plurality of hollow columns (9, 9', 9'') are provided which are connected with each other at the side and project from the wall of the casing and which are of varying heights.

2. Casing according to claim 1, characterised in that the columns are in the form of a lattice construction with intersecting cross-pieces.

3. Casing according to claim 1, characterised in that in cross-section the columne (9, 9', 9'') are in the form of a regular hexagon.

4. Casing according to claims 1 to 3, characterised in that the columns (9, 9', 9'') extend at right angles to the back wall (2) or front wall of the shaver and extend on to the side walls (3, 4) of the shaver from the back wall (2) or front wall so high that the side walls (3, 4) are completely covered from the inside.

5. Casing according to claim 4, characterised in that the columns (9'') extended on to the side walls (3, 4) are in cross-section in the form of a half hexagon and are connected with the respective side walls (3, 4) by perpendicular wall sections.

## Revendications

1. Capot d'un rasoir électrique, caractérisé en ce qu'on a prévu dans un espace libre du côté intérieur du capot une quantité de colonnes creuses (9, 9', 9") reliées ensemble latéralement et dépassant de la paroi du capot.

2. Capot selon la revendication 1, caractérisé en ce que les colonnes sont constituées par une construction de grille avec des barreaux qui se croisent.

3. Capot selon la revendication 1, caractérisé en ce que les colonnes (9, 9', 9") présent en section droite la forme d'un hexagone régulier.

4. Capot selon l'une quelconque des revendications 1 à 3, caractérisé en ce que les colonnes (9, 9', 9") s'étendent à angle droit de la paroi arrière (2) ou de la paroi avant du rasoir et en ce que, sur les parois latérales (3, 4) du rasoir, elles dépassent suffisamment de la paroi arrière (2) ou de la paroi avant pour que les parois latérales (3, 4) soient totalement recouvertes de l'intérieur.

5. Capot selon la revendication 4, caractérisé en ce que les colonnes (9") dressées vers le haut contre les parois latérales (3, 4) présentent en section droite la forme d'un demi-heagone et sont reliées à chacune des parois latérales (3, 4) par des portions de paroi se présentant à angle droit.

FIG. 1

<u>FIG. 2</u>